# EUROPEAN PATENT SPECIFICATION

(11) **EP 2 549 908 B1**
(45) Date of publication and mention of the grant of the patent: **05.11.2014**
(21) Application number: 11709099.3
(22) Date of filing: 10.03.2011
(51) Int. Cl.: A47J 27/21, A47J 27/212, C02F 1/00, B01D 35/143

(54) **A PERCOLATING FILTER DEVICE**
PERKOLATIONSFILTER
DISPOSITIF DE FILTRE DE PERCOLATION

(30) Priority: 22.03.2010 IT PD20100091
(43) Date of publication of application: 30.01.2013
(73) Proprietor: Laica S.p.A., 36021 Barbarano Vicentino (VI) (IT)
(72) Inventor: MORETTO, Maurizio, I-36100 Vicenza (IT)
(74) Representative: Locas, Davide
(86) International application number: PCT/EP2011/053623
(87) International publication number: WO 2011/117078

(56) References cited:
- EP-A1- 1 671 931
- WO-A1-2008/059939
- WO-A1-2009/090678
- GB-A- 2 441 981
- US-A- 6 024 867

## Description

The present invention relates to a percolating filter device of the type having a removable accessory.

A typical accessory normally fitted to percolating filter devices such as filter jugs, infusers and the like is an electronic indicator of the degree of exhaustion of the filter cartridge. An indicator of this type usually has a casing of plastics material which contains a printed circuit board (PCB) on which are mounted electronic components, a display, one or more batteries, and sensors if required.

Because of the structural design of these accessories, it is essential to use sealed casings which can also be easily fitted into and/or removed from the housing in which they are mounted on the filter device. In filter jugs, this housing generally takes the form of an opening in the lid and/or in the handle of the jug.

The problem of sealing arises from the need to ensure that no chemical compounds can leak from the batteries and/or from the components of the accessory into the water in the underlying bowl and thus contaminate it. Given that these jugs are used to filter water primarily for human consumption, it is clear that any possibility of such contamination must be considered unacceptable.

In order to eliminate the problem entirely, therefore, and prevent any possible contamination, the housing of the accessory must also be sealed and there must be no possibility of communication with the inside of the filter device.

It should also be borne in mind that the components of the filter device, such as the jug and its lid, are frequently subjected to repeated washing, possibly in a dishwasher, with hot water and detergents. Therefore the accessory must be easily removable from its housing and replaceable therein, in order to facilitate its removal before each washing. Otherwise, the moisture, contact with detergent, and high washing temperature may cause severe damage to the electronic components, the display and the batteries. Furthermore, if the accessory is not removed before washing, a certain amount of unhygienic dirty water may remain in the housing.

Conventionally, the casing of such an accessory and its housing in the wall of a filter device have fastening means and counter-means in the form of teeth and suitable recesses which can be coupled together when the accessory is fitted into its housing.

However, this has the disadvantage of drastically reducing the convenience and rapidity of the fitting and removal of the accessory. The casing of the accessory may also be damaged by the tools (small screwdrivers, blades and the like) which may be used for its forced removal.

There are also "resilient tab" fittings which may give rise to problems of incorrect coupling owing to faults in the machining of the tab and/or of the housing into which it is fitted. In fact, if the dimensional variation in the moulding of the various plastics parts is examined, it will be found that, unfortunately, these tabs are either too flexible or too rigid, thus making them unsuitable for use by the consumer.

An example of such solution is disclosed in the international patent application WO 2008 059939.

The fundamental problem of the invention is therefore to provide a percolating filter device whose structural and functional design is such that all the difficulties of the aforementioned prior art can be overcome.

This problem is resolved by the invention by means of a percolating filter device made in accordance with the following claims. The features and advantages of the invention will be made clearer by the following detailed description of a preferred embodiment thereof, illustrated, for the purposes of guidance and in a non-limiting way, with reference to the appended drawings, in which:

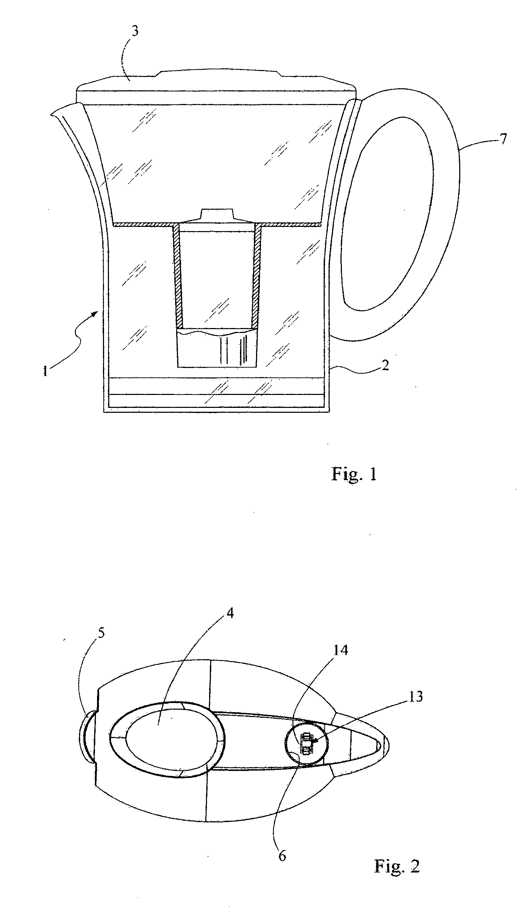

- Figure 1 is a side view of a filter device according to the present invention;
- Figure 2 is a view from above of the device of Figure 1;
- Figures 3 and 4 are two exploded views of two corresponding details of the device of Figure 1;
- Figures 5 and 6 are two side views of the detail of Figure 4 in two separate operating configurations;

Figure 7 is an enlarged sectional view of a component of the part shown in Figure 4.
In the drawings, the number 1 indicates the whole of a percolating filter device of the type including a jug 2 whose mouth is removably closed by a lid 3. The jug contains a replaceable cartridge filter of a known type. For information on elements not illustrated in the present description, reference may be made to the example of a filter jug described and illustrated in WO2009-012832.
In the lid 3 there are formed an opening 4 for filling the jug, a swingable cover 5 for a dispensing spout, and a blind housing seat 6 for an accessory 10 which, in this case, is an electronic device for indicating the degree of exhaustion of the cartridge. Additionally, the seat 6 is formed on the top part of a handle 7 of the jug 2.

The accessory 10 can be of various types and can have various functions, and it has a sealed casing 11, which houses, in a known way, a printed circuit board (PCB) on which electronic components, a display, one or more batteries and any necessary sensors are mounted.

According to the invention, the accessory 10 is retained removably in the seat 6 by corresponding quick release fastening means and counter-means.

These quick release fastening means and counter-means comprise a quick release fastening of the "push-push" type, such as that described in US6986535 (B2), with a male element 12 in the form of an arrowhead fixed to the base of the casing 11 and a female element 13 fitted in a sealed cup 14 formed in the base of the seat 6. The seat 6 and the cup 14 are sealed from the inside of the jug because they are made in one piece with the lid 3 during the moulding of the latter. In an entirely similar way, the male element can be formed in the seat 6 and the female element can be applied to the casing of the device, but this solution may be less convenient than the preceding one.

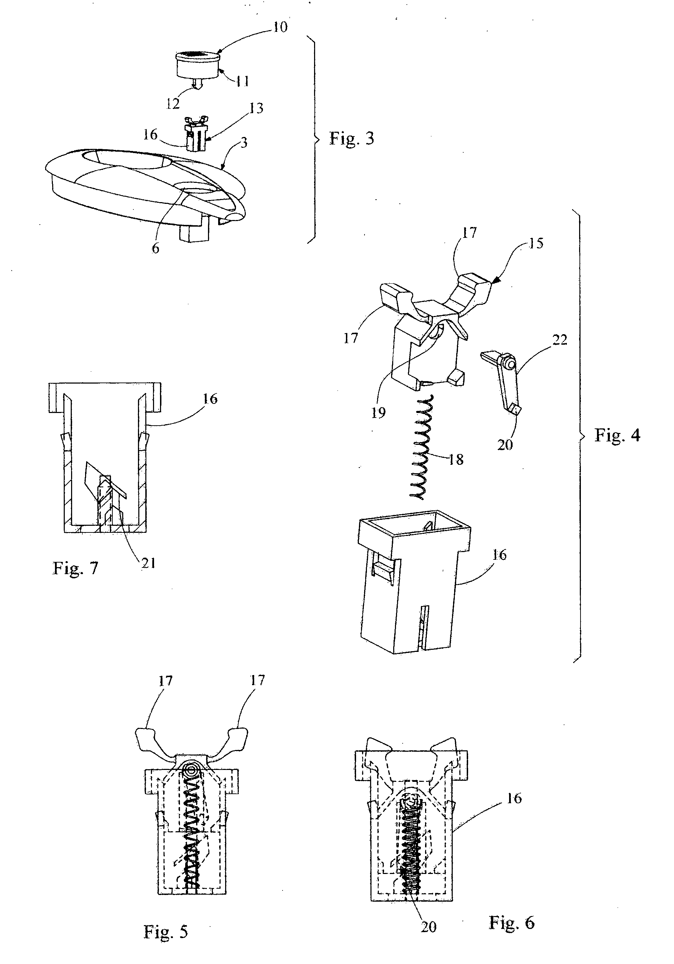

The male element 12 is preferably formed in one piece with the casing 11 of the accessory 10 and has a shape which mates with a retaining mechanism 15 of the female element 13. The latter element comprises a housing 16 in which the retaining mechanism 15 is slidably guided between an open position (Figure 5), in which two sprung ribs 17 project from the housing 16 and are spaced apart from each other, and a closed position (Figure 6), in which the ribs 17 are brought together and fitted into the housing 16. A spring 18 is provided between the housing and the retaining mechanism 15, together with a catch mechanism 22 to retain this mechanism in the two aforementioned positions. The catch mechanism 22 is engaged in a seat 19 of the mechanism 15 and carries on its opposite end a tooth 20 which interacts with a cam profile 21 of the housing 16. The interconnection, which is of a known type, is such that, starting from the open position of the female element and with the accessory 10 removed from the lid 3, the accessory is pressed into the seat 6, thus causing the retaining mechanism to move from the open to the closed position, with the ribs 17 closed on the arrowhead of the male element which is therefore locked in the seat. Conversely, when the accessory 10 is pressed once again towards the inside of the seat 6, the retaining mechanism moves from the closed to the open position, with the ribs 17 spaced apart from each other to release the male element 12 and thus release the accessory 10. It should be noted that, because of the springing of the retaining mechanism and the opening and the projection of the ribs from the housing 16, the accessory 10 is not simply released but is actually expelled from the seat 6, thus facilitating its extraction.

The invention therefore resolves the problem stated at the outset, while providing numerous advantages, including the fact that, since the expulsion of the accessory from its seat in the lid is facilitated, the accessory can be easily and immediately removed whenever the lid is washed, thus improving the hygiene of the filter device on the one hand, while, on the other hand, making it less likely that the accessory will be accidentally put into a dishwasher, where it would almost certainly be damaged beyond repair.

## Claims

1. A percolating filter device including a casing (2, 3), a replaceable cartridge filter removably in said casing and a casing wall on which is formed a seat (6) for receiving an accessory (10), said accessory (10) being retained in this seat (6) in a removable way by corresponding fastening means and counter-means (12, 13), said seat (6) being sealed from the inside of said casing (2, 3) and being accessible only from the outside thereof, **characterized in that** said fastening means and counter-means (12, 13) comprise a quick release fastening of the push-push type (12, 15).

2. A percolating filter device according to Claim 1, wherein said wall includes a lid (3) and/or a portion of a handle (7) of the device.

3. A percolating filter device according to Claim 1 or 2, wherein the device is a filter jug (1).

4. A percolating filter device according to any one or more of the preceding claims, wherein said quick release fastening comprises a male element (12) fixed to said accessory and a female element (13) mounted in said seat (6).

5. A percolating filter device according to any one or more of the preceding claims, wherein said accessory comprises an electronic indicator of the degree of exhaustion of the filter cartridge.

## Patentansprüche

1. Perkolationsfiltervorrichtung mit einem Gehäuse (2, 3), mit einem austauschbaren Kartuschenfilter, der aus dem Gehäuse entfernbar ist, und mit einer Gehäusewand, auf der ein Sitz (6) zum Aufnehmen eines Zubehörteils (10) ausgebildet ist, wobei das Zubehörteil (10) in diesem Sitz (6) in entfernbarer Weise durch jeweilige Befestigungsmittel und Kontermittel (12, 13) gehalten wird, wobei der Sitz (6) von der Innenseite des Gehäuses (2, 3) her abgedichtet und nur von der Außenseite davon zugänglich ist, **dadurch gekennzeichnet, dass** die Befestigungsmittel und Kontermittel (12, 13) einen Schnellverschluß eines Druck-Druck-Typs (12, 15) aufweisen.

2. Perkolationsfiltervorrichtung gemäß Anspruch 1, wobei die Wand einen Deckel (3) und/oder einen Bereich eines Griffs (7) der Vorrichtung umfasst.

3. Perkolationsfiltervorrichtung gemäß Anspruch 1 oder 2, wobei die Vorrichtung eine Filterkaraffe (1) ist.

4. Perkolationsfiltervorrichtung gemäß einem oder mehrerer der vorhergehenden Ansprüche, wobei der Schnellverschluß ein Außenelement (12), dass am Zubehörteil fixiert ist, und ein Innenelement (13) aufweist, dass im Sitz (6) befestigt ist.

5. Perkolationsfiltervorrichtung gemäß einem oder mehrerer der vorhergehenden Ansprüche, wobei das Zubehörteil eine elektronische Anzeige des Erschöpfungsgrads der Filterkartusche aufweist.

## Revendications

1. Dispositif de filtre de percolation comprenant un boîtier (2, 3), un filtre à cartouche remplaçable de manière amovible dans ledit boîtier et une paroi de boîtier sur laquelle est formé un siège (6) pour recevoir un accessoire (10), ledit accessoire (10) étant retenu dans ce siège (6) d'une manière amovible par des moyens et des contre-moyens de fixation (12, 13) correspondants, ledit siège (6) étant étanche depuis l'intérieur dudit boîtier (2, 3) et étant uniquement accessible depuis son extérieur, **caractérisé en ce que** lesdits moyens et contre-moyens de fixation (12, 13) comprennent une fixation à libération rapide du type push-push (12, 15).

2. Dispositif de filtre de percolation selon la revendication 1, dans lequel ladite paroi comprend un couvercle (3) et/ou une partie d'une poignée (7) du dispositif.

3. Dispositif de filtre de percolation selon la revendication 1 ou 2, dans lequel le dispositif est une carafe filtrante (1).

4. Dispositif de filtre de percolation selon l'une quelconque ou plusieurs des revendications précédentes, dans lequel ladite fixation à libération rapide comprend un élément mâle (12) fixé audit accessoire et un élément femelle (13) monté dans ledit siège (6).

5. Dispositif de filtre de percolation selon l'une quelconque ou plusieurs des revendications précédentes, dans lequel ledit accessoire comprend un indicateur électronique du degré d'épuisement de la cartouche filtrante.
